Europäisches Patentamt

European Patent Office

Office européen des brevets

(11) Publication number: **0 214 725 B1**

(12) **EUROPEAN PATENT SPECIFICATION**

(45) Date of publication of patent specification: **15.01.92**  (51) Int. Cl.⁵: $C22C$ **33/02**, $B22F$ **3/26**

(21) Application number: **86305440.9**

(22) Date of filing: **15.07.86**

(54) **High impact strength powder metal part and method for making same.**

(30) Priority: **15.07.85 US 755282**
**20.05.86 US 866184**
**25.06.86 US 879502**

(43) Date of publication of application:
**18.03.87 Bulletin 87/12**

(45) Publication of the grant of the patent:
**15.01.92 Bulletin 92/03**

(84) Designated Contracting States:
**AT BE CH DE FR GB IT LI LU NL SE**

(56) References cited:
**FR-A- 2 157 563**
**US-A- 4 491 558**

**E. KLAR: "Metals handbook", 9th edition, vol. 7, Powder metallurgy, 1984, pages 557-559, American Society for Metals, Ohio, US;**

(73) Proprietor: **SCM METAL PRODUCTS INC.**
**11000 Cedar Avenue**
**Cleveland Ohio 44106(US)**

(72) Inventor: **Svilar, Mark**
**2251 Brockway**
**University Heights Ohio(US)**
Inventor: **Glancy, Stephan**
**749 Montana Avenue**
**Akron Ohio(US)**
Inventor: **Klar, Erhard**
**2477 Brian Drive**
**Beachwood Ohio(US)**

(74) Representative: **Madgwick, Paul Roland et al**
**Ladas & Parry Isartorplatz 5**
**W-8000 München 2(DE)**

**Description**

TECHNICAL FIELD

The present invention relates to infiltrated, ferrous powder metal parts having high impact strength, and to a method for making the same.

The present invention will be particularly described with reference to the infiltration of ferrous powder metal parts employing copper based materials as infiltrants.

BACKGROUND OF THE PRESENT INVENTION

Conventional ferrous, powder metal parts produced by simple pressing and sintering are known to have rather low dynamic properties; that is, impact and fatigue strength, because of the presence of the pores in such parts. Approaches to overcome this drawback include various methods for achieving full or nearly full density.

One of the least expensive methods to achieve nearly full density is to infiltrate such parts with copper or a copper based infiltrant. Infiltration of porous iron and steel parts with copper has been in commercial use since the 1940's. The most common reason for using this process is to improve the mechanical properties of a powder metallurgy part.

In spite of the ability to achieve nearly full density by infiltration with a suitable infiltrant, published data on copper infiltrated ferrous powder metal parts shows only small improvement in dynamic properties over uninfiltrated parts.

The impact strength of powder metal parts is important for many end use applications. One example is gear parts. A critical area for a gear part is at the root of the gear teeth, and a weakness in this area creates a potential for gear failure. In determining impact strength on gear teeth, a special tool applies a tangential force to a gear tooth, and the impact strength is essentially the energy necessary to establish failure in the gear critical area.

A conventional method for determining impact strength of specimens is the Charpy impact test procedure described in the Metal Powder Industries Federation (MPIF) Standard 40, 1974 Metal Powder Industries Federation P.O. Box 2054, Princeton, NJ 08540. In this test, unnotched specimens are formed into a defined rectangular shape having specified dimensions, and are placed in a pendulum-type impact machine with a capacity of at least 149 Joules (110 ft. lbs)(15.2 m-kg). The impact strength is the average of three tests reported to the nearest foot pound. For purposes of the present application, the term impact strength, where used herein, shall mean, unless otherwise noted, the strength values obtained following the Charpy-type test procedure outlined in Standard 40.

Parts made from the state of the art powder metallurgy, i.e., pressed and sintered or infiltrated, have very low impact strengths - typically only 4 to 27 J(3 to 20 ft.lbs.) measured by the unnotched Charpy test. Higher impact strength would enable these low cost methods to be used for higher performance parts that are now made by alternative technologies that are more expensive, i.e., powder metal forging, hot pressing, injection molding.

Another mechanical property of interest in the preparation of many ferrous powder metal parts is the tensile strength. This property, and the test for determining it, are described in MPIF Standard 10. An aspect of the tensile strength of a powder metal part is the elongation of the part that occurs prior to failure. In the present application, the tensile strength and elongation shall be given (unless otherwise stated) in terms of kips per square inch (ksi) and percent elongation (E%), respectively, following the procedure of Standard 10.

In the prior art is a paper published in 1949, by R. Kieffer and F. Benesovsky, entitled "The Production and Properties of Novel Sintered Alloys (Infiltrated Alloys)", Berg-und Huttenmannische Monatshefte, Volume 94 (No. 8/9), 1949, pages 284-294. The paper reports that an impact strength of about 62J (46 ft. lbs) can be obtained by sintering and infiltrating under hydrogen and then heat treating the infiltrated parts. However, even this figure is low.

US-Patent No. 2,768,917 to Pettibone, dated 10/30/56, also discloses a two-step sintering and infiltrating process under hydrogen atmosphere for ferrous metal parts using a copper alloy infiltrant. No impact strength data is given in the paper.

It is reported by Rostoker & Clemens in The International Journal of Powder Metallurgy & Powder Technology, Volume 17, No. 4, 1981, pages 278-289/280, that excessive reduction in pore size is undesirable, (with no disclosure of any uninfiltrated pore sizes) the initial sintered density level representing a compromise between the necessity for interconnection between voids and undesirably excessive void volume. No impact strength data is given in this paper.

It is described in a paper by Ashurst et al "Copper infiltration of steel: Properties and Applications," Progress in Powder Metallurgy, (H. S. Nayar et al, editors), volume 39, pages 163-182, that impact toughness of copper infiltrated steels can be increased up to about 41J (30 ft. lbs) through control of erosion. This was minimized through proper metallurgical formulation of the copper infiltrant, and strategic placement of the infiltrant slug onto the steel part.

In 1973, Kimura & Hamamoto, in a publication entitled "Strengthening of Iron and Powder Compacts by Infiltration", Modern Developments in Powder Metallurgy, (H. H. Hausner & W. E. Smith, Eds.), 1973, pp. 135-147, the low mechanical properties of copper infiltrated parts are attributed to the great discrepancy in strength between the steel matrix and the copper phase.

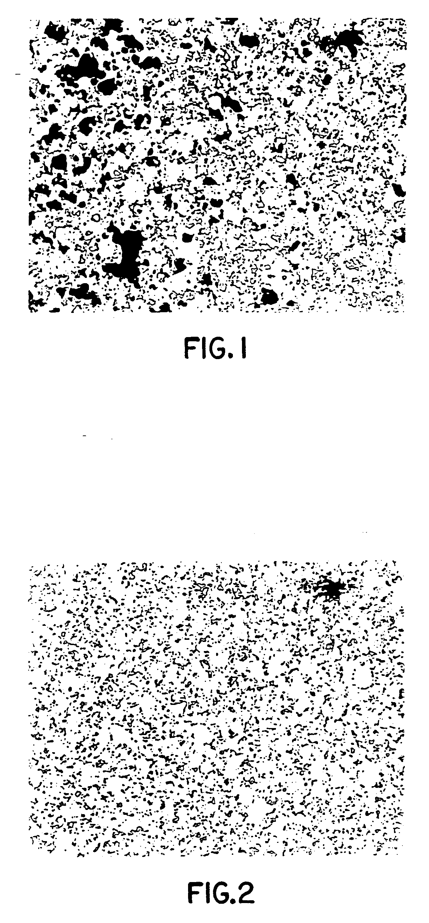

In a paper entitled "Impact Properties of Copper Infiltrated Sintered Iron", Journal Japan Society Powder Metallurgy, July, 1973, Vol 20, pages 71-79 by Kuroki et al, there is given some data on various parameters involved in infiltration, including data comparing the use of short infiltration times against longer infiltration times. There is no reference in the paper to the criticality of specific pore sizes or porosity towards obtaining good mechanical strength properties. In Fig. 2 of the paper, combinations for tensile strength and impact strength are given; namely 579 MPa (84 ksi) and 15J (11 ft. lbs); 393 MPa (57 ksi) and 57J (42 ft. lbs.) 296 MPa (43 ksi) and 113J (83 ft. lbs.) respectively. The data of highest impact strength was obtained with 100 Sec. infiltration time; that of highest tensile strength at 135 min. infiltration time.

The impact strength foot pound numbers were obtained by conversion from kilogram meters data given in Fig. 2, which is based on centimeters squared.

It is impossible to verify the results of Kuroki et al. It is indicated in the Kuroki et al paper that the tests were carried out on notched test pieces which were 8 × 8 × 40 mm in dimension. The notches were described as being U-shaped, having a depth of 1.6 mm with a 1 mm base radius. Conventionally the Charpy Impact Test for powder metal parts is carried out with unnotched test pieces which are 10 × 10 mm in cross-section. In terms of cross-section, the Kuroki et al specimens are non-standard, specifically about 64/100ths the size of the parts conventionally tested by the Charpy test.

Notching will have an adverse affect on impact strength. On the other hand, it is well known that the smaller the specimen the better its ductility and toughness. It can be expected that the loss in strength due to notching vs unnotched would be off-set to a greater or lesser degree by the increase in strength due to the use of small-sized specimens. However, it is impossible to correlate the Kuroki et al method of testing with the standard Charpy test. In addition, there is a lack of information in Kuroki et al on the iron powder used, which is believed to be no longer available, and on their method of preparation of samples.

One significant fact to note in the Kuroki et al data is that as the impact strength is increased, this is at the expense of tensile strength. They give no data showing improvement at the same time in both tensile strength and impact strength.

One reason for the lower values of Kuroki et al may be improper combinations of carbon content and heat treatment. All of the Kuroki et al data was obtained with carbon-free material.

US-A-4 491 558 discloses a ferrous powder metal article infiltrated with a copper alloy without discussing pore size in the uninfiltrated porosity.

## DISCLOSURE OF INVENTION

The present invention resides principally in the discovery that the residual porosity after infiltration and maximum pore size of uninfiltrated porosity is a critical aspect of high impact strength. More specifically, the present invention resides in the discovery that a powder metal iron or steel part infiltrated with a copper or copper alloy; having after infiltration a residual uninfiltrated porosity of less than 7 volume percent, and a maximum pore size of the residual uninfiltrated porosity of less than 125 micrometers, wherein both values are taken from a worst field of view in a functionally critical area gives consistently high impact strength values of more than 67.8J (50 ft. lbs.) while at the same time maintaining high ultimate tensile strength values greater than 413,700 KPa (60 ksi). These values are obtained in the as-infiltrated condition prior to any heat treatment.

The powder metal part according to the invention is defined in claim 1.

For purposes of the present invention, the critical area is defined as that area adjacent a fractured surface of an infiltrated part subjected to failure obtained by clean cutting-off the fractured surface and polishing the cut area. The worst field of view is obtained by viewing and analyzing a plurality of views of the cut polished surface. In the present invention, 50 fields of view are analyzed to obtain a worst field of view. Residual uninfiltrated porosity and maximum pore size data is obtained by measurement under magnification. The volume percent porosity is obtained from the area measurement following a procedure outlined in pages 446-449 of the National Bureau of Standards Publication 431, dated January, 1976.

Preferably, the worst field of view has a porosity less than 5 percent and a maximum pore size of residual uninfiltrated porosity of less than 75 micrometers.

For purposes of the present application, the term "powder metal iron or steel" includes plain carbon steels, tool steels, stainless steels, e.g., 304L stainless powder marketed by SCM Metal Products) and low alloy steels such as 4600. Typical examples of alloying elements are nickel, molybdenum and chromium. Tool steels may contain such elements as vanadium and tungsten. Preferably, the powder metal is a carbon steel having a combined carbon content in the range of 0.15% to 1.25%. A preferred range is 0.25% to 1.05% carbon.

The ferrous powder metal part infiltrated with copper or a copper alloy is characterized as having after infiltration an overall density of at least 7.50 g/cm$^3$ and a diffusion depth of copper into the steel matrix of less than about 4 micrometers as determined by chemical etching or less than about 8 micrometers as determined by electron dispersive X-ray analysis (EDXA).

Preferably, the metal part has a diffusion depth less than 3 micrometers as determined by chemical etching or less than 5 micrometers as determined by EDXA.

Also, in a preferred embodiment the infiltrant is copper, containing typically an alloying constituent such as iron, tin, zinc, silver, lithium, silicon, manganese, chromium, zirconium, and combinations thereof.

An important aspect in the present invention, towards staying within the diffusion depth parameters stated above, is employing as the powder metal an iron powder having an added carbon content (as distinguished from combined carbon content, supra) in the range of 0.3 to 1.4 percent, based on the weight of the copper-free skeleton. This percent carbon is the amount (wt. %) of carbon added to the iron powder for preparing a so-called green part. During sintering and infiltrating, a portion of this carbon is lost due to the formation of carbon monoxide and carbon dioxide, the oxygen content of the iron powder being the source of oxygen. Carbon may also be lost through the formation of hydrocarbons with the hydrogen of the sintering atmosphere. Typical carbon losses due to these causes amounts to 0.10 to 0.20%, or an average of about 0.15%, based upon the copper-free steel skeleton.

In the Examples herein, which are method Examples, the percent carbon, for the purpose of convenience, is generally expressed in terms of percent carbon (or graphite) added. The percent carbon remaining (combined carbon) where given is the percent carbon added minus 0.15%, based on the steel skeleton only, i.e., not counting the amount of copper added to the part by infiltration. Accordingly, in terms of combined carbon or the carbon analysis of a finished part, the critical range again is between 0.15 percent and 1.25%. A preferred range again is 0.25% to 1.05%. It is understood that the percent carbon added can be in the form of carbon blended in with the iron powder (as graphite) or carbon alloyed with the iron.

Although not to be bound by a particular theory, it is believed that these percents carbon inhibit the diffusion of the copper into the ferrous metal particles during infiltration, and in so inhibiting diffusion, more than offset the negative aspect of the addition of carbon on impact strength. Optimum results have been obtained with an added carbon content of about 0.9% (0.75% combined carbon).

The "diffusion depth" of copper is determined by measuring the copper concentration at various depths, for instance one, two or three micrometers, and plotting the copper concentration data against depth data on semi-logarithmic paper.

The copper concentration is plotted along the linear scale starting from zero, and the depth is plotted along the logarithmic scale starting from zero. The connection of the experimental points forms approximately a straight line and the "diffusion depth" is the point of intersection of the straight line with the logarithmic scale at zero percent copper concentration.

In those cases where the iron or steel contains prior to infiltration a more or less uniformly distributed base amount of copper, (a base concentration, for instance about several percent copper, can be tolerated) the same procedure for determining diffusion depth is employed, except that only the experimental points close to the surface of the steel particle are used to form said straight line. A new base line is then drawn parallel to the logarithmic scale at the level of the base amount of copper, and then the point of intersection obtained by extrapolation of the straight line with the new base line establishes the "diffusion depth".

The present invention also resides in novel processes for the preparation of the powdered metal iron or steel parts set forth above, the process being defined in claim 6.

Optional features thereof are set out in claims 7 to 12.

BRIEF DESCRIPTION OF THE DRAWINGS

The present invention will become more apparent from the following specification, with reference to the accompanying photomicrographs, photographs, and drawings, in which

Figure 1 is a field of view photomicrograph at 50 magnification, showing a plain, polished cross-section of a specimen part having high localized porosity;

Figure 2 is a field of view photomicrograph at 50 power, of a specimen prepared in accordance with the concepts of the present invention, specifically a specimen. prepared by the procedure of Example 1.

Figure 3 is a graph showing the change in microhardness through a carbon steel particle using data taken from a specimen which was infiltrated for 90 minutes, and then austenitized, quenched and tempered at 1300°F 705°C;

Figure 4 shows the relative deformations after impact testing for samples infiltrated for 5 and 90 minutes as well as their respective impact strengths; and

Figure 5 is a graph showing the variation in impact strength with percent graphite added for samples infiltrated for short times (Example 6 data).

## BEST MODE FOR CARRYING OUT THE INVENTION AND INDUSTRIAL APPLICABILITY

The method of the present invention resides broadly in the steps of carefully filling a die with powdered metal to obtain uniform distribution of powder metal within said die. This includes drawing an instrument across the surface of the die to assure a level fill or surface of the powder metal in the die. At this point, the powder metal is subjected to pressing to obtain a density of at least about 80% of theoretical or full density. Then, the powder metal is subjected to vacuum sintering under conventional sintering conditions (vacuum and temperature), which may vary with the powdered metal being employed. A vacuum of about 0.3 Torr is representative. Vacuum sintering is then followed by infiltration employing conventional infiltrating temperatures. However, the infiltration is also carried out under vacuum to eliminate residual gases which may be trapped in the pores. Preferably, these steps are followed by heat treatment through austenitizing and tempering to improve the ductility of the powder metal part.

Preferably, the infiltration is carried out in a short time, e.g., less than fifteen minutes, preferably less than seven minutes, as will be discussed in the following Example 3. It is believed that a short infiltration time, in combination with the percent added carbon, is an important factor towards staying within the diffusion depth parameters set forth above.

In the specification and Examples, the infiltration and sintering are generally carried out in separate successive steps. It is understood that the advantages of the present invention can be realized by carrying out these two steps in a single step process, as shown in Example 9.

Critical in the above is carrying out the process steps in such a way as to obtain the maximum percent porosity and pore size herein previously specified.

As an alternative to vacuum sintering and infiltration, good results can be obtained by sintering and infiltrating under a hydrogen atmosphere.

The following examples are illustrative of the concepts of the present invention. In the following Examples, tensile strength is given in terms of mega pascals and kips per sq. inch (ksi). One kip equals 1000 lbs. Density is given in terms of grams per cubic centimeter (g/cc). Example 1 shows the importance of the part microstructure on mechanical properties.

Carbon, copper and alloy percents are weight percents based on the weight of the iron or steel skeleton without these ingredients, unless otherwise specified.

## EXAMPLE 1

Izod impact specimens (MPIF Standard 40) were pressed from a commercially available atomized iron blend (marketed by Hoeganaes under the trademark Ancorsteel 1000) having 0.9% graphite and 0.75% zinc stearate. The pressing was carried out to a density of about 7.1 g/cc, or about 90% of theoretical. Special care was taken to assure uniform and even die fill.

Sintering was carried out under vacuum, using helium at a partial pressure of 300 micrometers mercury (.3 Torr). The sintering cycle wad 1400°F760°C for 30 minutes and 2050°F 1120°C for 30 minutes. Cooling time to room temperature was about 1 hour.

A minimal erosion infiltrant slug (SCM Metal Products IP 204, a prealloyed copper infiltrant having 2-3% iron, 0.5-1.5% manganese, other 0.5-1.0%, lubricant 0.5%) weighing 12.8% of the impact specimen, was placed on top of one end of the specimen and infiltration was carried out under vacuum using the same cycle as described for the sintering treatment. The weight of the slug was sufficient to provide about 5-10% excess infiltrant over that required.

The infiltrated specimens were then austenitized by placing the specimens in a furnace at 1652°F 900°C for 30 minutes (the specimens were at the temperature of 1652°F 900°C for approximately 10 minutes) followed by water quench and tempering for 1 hour at 1157°F 625°C under an inert atmosphere.

The Izod bar length was then reduced to that of the standard Charpy bar (MPIF Standard 40). Impact values obtained were 176, 178 and 134J (130, 131 and 99 ft. lbs. respectively) for a set of three bars. The tensile strength of the dog bone tensile bars (MPIF Standard 10) processed the same way as the impact bars, was 710 MPa (103 ksi).

The specimens showed no signs of erosion when viewed under a low magnification stereo-microscope. The Archimedes density of the parts was about 7.80 g/cc, or nearly full density. Uninfiltrated porosity was determined by considering only the worst field of view (914 micrometers by 1371 micrometers) taken from viewing 50 fields of view of a cross-section near the fracture surface. The largest pore size observed in 50 random fields of view was less than 55 micrometers. The worst field porosity was 0.8% for the specimen with an impact toughness of 178J (131 ft. lbs), and 1.6% porosity for the specimen having 134J (99 ft. lbs.).

Fig. 2 is a field of view photomicrograph taken at 50 power of the specimen having an impact stength of 178J (131 ft. lbs). In this photomicrograph, the light areas are the iron matrix and the greyish areas are the copper infiltrant. The photomicrograph shows no uninfiltrated porosity. This was a typical view taken of the functionally critical area. By contrast, the specimen of Fig. 1 had high porosity (the black areas of Fig. 1). This specimen was obtained following a procedure similar to the above procedure, except that the sintering was not carried out under vacuum. The view of Fig. 1 was illustrative of the functionally critical area porosity of this sample. A worst field of view was measured to have 23% porosity and a maximum pore size of 300 micrometers. Impact strength for this specimen was only 37J (27 ft. lbs.).

This comparative data dramatically illustrates the importance of residual porosity on impact strength.

The impact values of the three specimens of this Example were substantially 3 times those reported by Kieffer and Benesovsky using similar heat treatment after infiltration. This large difference 120J (nearly 90 ft. lbs.) clearly demonstrates the advantages of the present invention. With regard to the general state-of-the-art, the data obtained represented a nearly 10-fold improvement. It should also be noted that high impact values were obtained while retaining good tensile strength.

The following Examples 2-5 illustrate the importance of limiting diffusion depth of copper in the iron powder particles.

EXAMPLE 2

Izod impact specimens (MPIF Standard 40) were pressed from commercially available atomized iron (marketed by Hoeganaes under the trademark Ancorsteel 1000) blended with 0.9% graphite and 0.75% zinc stearate. The pressing was carried out to a density of 6.70 g/cm$^3$, or about 85% of theoretical. Special care was taken to assure uniform and even die fill.

Sintering was consistent under vacuum, using helium at a partial pressure of 300 micrometers mercury (0.3 Torr). The sintering cycle was (760°C)1400°F for 30 minutes and 1120°C (2050°F) for 30 minutes. Cooking time to room temperature was about 1 hour. A minimal erosion infiltrant slug (SCM Metal Products IP-204, a prealloyed copper infiltrant having 2-3% iron, 0.5-1.5% manganese, other 0.5-1.0%, lubricant 0.5%), weighing 21% of the impact specimen, was placed on top of one end of the specimen and infiltration was carried out under vacuum using the same cycle as described for the sintering treatment except that the length of time at 1120°C (2050°F) was 7 minutes instead of 30 minutes. The weight of the slug was sufficient to provide about 10% excess infiltrant over that calculated to fill the pores.

The infiltrated specimens were then austenitized by placing them in a furnace at 900°C (1652°F) for 30 minutes (the specimens were at the temperature of 900°C (1652°F) for approximately 10 minutes) followed by an oil quench and tempering for 1 hour at 705°C (1300°F) under an inert atmosphere.

The Izod bar length was then reduced to that of the standard Charpy bar (MPIF STandard 40). Impact values obtained were 221 to 235J (163 and 173 ft. lbs) for a set of two bars. The tensile strength of the dog bone tensile bars (MPIF Standard 10) processed the same way as the impact bars, was about 689MPa (100 ksi). The specimens showed no sign of erosion when viewed under a low magnification stereo-microscope. The density of the parts was about 7.87 g/cm$^3$, or nearly full density. The microstructure as determined by etching a polished cross section taken from the vicinity of the fractured area, with 2% nital showed that the copper had diffused into the steel particles to an average depth of about 2.5 micrometers. The determination of the diffusion depth of copper by electron dispersive X-ray analysis gave a depth value of about 4 micrometers. The reason for the different values for the two methods lies in the fact that the concentration of the copper within the steel matrix particles decreases from the outside towards the inside of a particle and the distinction by chemical etching disappears below a critical copper concentration. Thus, chemical etching gives lower figures in comparison to EDXA, but it is a more convenient, practical, and less expensive method than EDXA.

EXAMPLE 3

Samples were prepared following the procedure of Example 2, except that the green specimens were pressed to a density of 7.05 g/cm$^3$ rather than 6.7 g/cm$^3$. Also, a slug weight of 14%, based on the matrix weight, was employed. And finally, infiltration times, i.e., times at 1120°C (2050°F), were 4,7, 30 and 90 minutes, respectively. The properties of these specimens are shown in the following table:

The ultimate tensile strengths of the above specimens were all between 758 and 862MPa (110 and 125 ksi) the lower values belonging to the short infiltration times, the higher ones to the long infiltration times. It is therefore clear from the above data that short time infiltration times with shallow depths of copper diffusion gives significantly improved impact strength without significant losses in tensile strength. The greatest loss in impact strength occurs during the first 15 to 30 minutes of infiltration.

| Impact Bars # | Infiltration Time(minutes) | Unnotched Charpy Impact Strength | | Density g/cm³ | Diffusion Depth of Copper into steel matrix | |
| --- | --- | --- | --- | --- | --- | --- |
| | | Ft.lbs. | Joules | | by Chemical Etching μm | by EDXA μm |
| A1 | 4 | 129 | 175 | 7.72** | | |
| A2 | 4 | 198 | 268 | 7.78 | 1.5 | 3 |
| A3 | 4 | 191 | 259 | 7.79 | | |
| A10 | 7 | 170 | 230 | 7.87 | | |
| A11 | 7 | 169 | 229 | 7.88 | 2.5 | 4 |
| A12 | 7 | 191 | 259 | 7.88 | | |
| Comparative (A22 | 30 | 137 | 189 | 7.88 | | |
| (A23 | 30 | 148 | 201 | 7.90 | 5.0 | 11 |
| (A24 | 30 | 134 | 182 | 7.90 | | |
| Comparative (A29 | 90 | 111 | 151 | 7.87 | | |
| (A30 | 90 | 95 | 129 | 7.86 | 7.5 | 20 |
| (A31 | 90 | 114 | 155 | 7.87 | | |

**Incompletely infiltrated

The above data also shows that density has little effect on strength. In fact, the higher impact strength parts obtained at shorter infiltration times generally had lower densities than the longer infiltrated parts.

EXAMPLE 4

This Example was carried out following the procedure of Example 3, except that the slug to metal matrix ratio was varied from 7 to 21%. The results of this series of experiments are summarized in the following Table:

| Impact Bar # | Unnotched Charpy Impact Strength Ft. Lbs. Joules | | Slug/Matrix Ratio % | Density g/cm³ | Average Porosity 1) % | Maximum Porosity 2) % | Maximum Pore Size 2) um |
|---|---|---|---|---|---|---|---|
| Comparative A41 | 35 | 47 | 7 | 7.08 | 10.3 | 15 | 150 |
| A43 | 53 | 72 | 15 | 7.59 | 3.8 | 8 | 110 |
| A46 | 72 | 98 | 17 | 7.73 | 2.1 | 6 | 90 |
| A50 | 92 | 125 | 18 | 7.76 | 1.6 | 5 | 80 |
| A51 | 138 | 187 | 19 | 7.85 | 0.5 | 2.5 | 70 |
| A55 | 133 | 180 | 20 | 7.86 | 0.4 | 2 | 70 |
| A59 | 173 | 235 | 21 | 7.86 | 0.4 | 2 | 70 |

Note: 1) Determined from weight and dimensions of impact bars.

2) Determined by quantitative image analysis by examining 50 frames.

These results demonstrate that it is possible through the use of short infiltration times to obtain impact strengths of over 67,8 J (50 ft. lbs.) at an overall density as low as 7.59 g/cm³, corresponding to an average porosity of 3.8%. The ultimate tensile strengths of dog bone tensile specimens treated the same way were about 689MPa (100 ksi).

This data, however, also shows that the best results are obtained by meeting the porosity and pore size criteria; namely, less than 7 volume percent and 125 micrometers. Optimum results are obtained by infiltration to a worst field of view porosity of less than 5 volume percent and a maximum pore size of less than 75 micrometers.

## EXAMPLE 5

Samples were prepared as in Example 2, except that pressing of the steel matrix was carried out to a density of 7.04 g/cm$^3$, the infiltrant slug weight was 14% with respect to that of the steel matrix, and sintering was done for 30 minutes in hydrogen. Also, infiltration was done for 7 minutes at 1120°C (2050°F) in hydrogen.

Unnotched Charpy impact strength was 191J (141 ft.lbs.) (average of 3 specimens) and ultimate tensile strength was 972 MPa (141 ksi.) This data demonstrates that it is possible to obtain excellent combinations of impact and tensile strength by sintering and infiltrating in a reducing atmosphere rather than under vacuum.

The above Examples demonstrate that it is possible to obtain impact toughness several times as high as reported in the literature. While we do not intend to be limited to particular explanations of our results, we believe that longer infiltration times result in greater diffusion depths of copper into the steel matrix which produces a thicker and harder layer of material enveloping the iron and constraining plastic deformation which in turn results in a reduced impact strength.

Copper is known to precipitation harden iron or steel. The higher the concentration of copper and the greater the depth copper is found in the iron, the thicker and harder is the layer of material enveloping the iron core and restraining plastic deformation, in turn reducing impact strength.

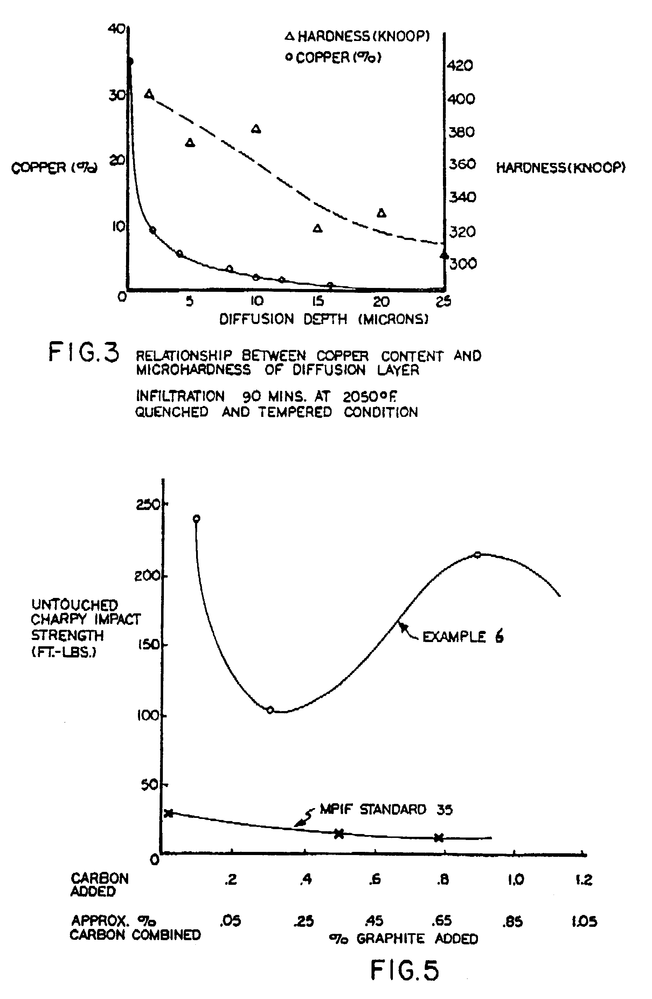

Figure 3 shows the microhardness profile through a steel particle taken from a specimen that had been infiltrated for 90 minutes, austenitized, quenched, and tempered at 705°C (1300°F). The higher hardness at both sides of the iron particle is evident.

Short infiltration times also are advantageous from the point of view of dimensional control of the part.

Copper infiltration is known to lead to a swelling of a part due to the solution of copper in the steel and the penetration of copper in between particles. This growth is approximately linearly proportional to the length of infiltration. Thus, shorter infiltration times, apart from economic savings, are beneficial in that they keep growth desirably small and more reproducible.

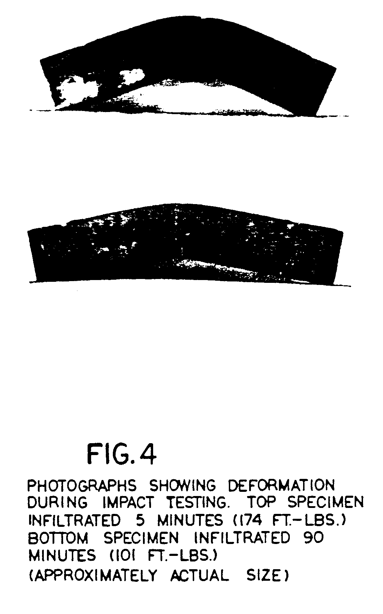

Figure 4 shows the relative deformations for samples infiltrated for 5 and 90 minutes as well as their respective impact strengths.

It also follows from the above that desirable microstructures should be obtainable not only by using short infiltration times but by using additives (for instance carbon ) that reduce the rate of copper diffusion into the steel matrix.

In this regard, the presence of carbon, or use of a carbon steel, has been found to be important, the presence of carbon also tending to reduce the rate of copper diffusion into the steel matrix. As indicated, optimum results have been obtained using .9% carbon steel.

The following Example 6 illustrates the importance of the presence of carbon in the steel matrix.

## Example 6

Samples were prepared as in Example 2, except that the iron powder was A1000SP (marketed by Hoeganaes Corporation), the graphite was "Graphite 2.5", manufactured by Lonza, and the lubricant was "Acrawax C", trademark of Glyco, Inc. Also, the amount of graphite addition was varied from 0 to 0.9%. The results are shown in the following table:

| Impact Bar # | Carbon Content % | Unnotched Charpy Impact Strength Ft. Lbs. |
|---|---|---|
| (Comparative) A118 | 0 | 240 325 |
| (Comparative) A127 | 0.1 | 240 325 |
| A137 | 0.3 | 106 144 |
| A138 | 0.9 | 218 296 |

Although the samples with zero percent and 0.1% added carbon had the highest impact strengths, the ultimate tensile strengths for these specimens were very low, about 345 MPa (50 ksi). By contrast, the specimen wit about 0.9% carbon had a tensile strength of about 689MPa (100. ksi). In the range between about 0.3% carbon and 0.9% carbon, the impact and ultimate tensile strengths increased simultaneously.

These and other results indicate that attractive combinations of both impact and ultimate tensile strength can be obtained with added carbon contents higher than about 0.3%, and that a broad range in the practice of the present invention exists in the area between about 0.3 to about 1.4% added carbon, an optimum range being between about 0.4 and about 1.2%. In terms of combined carbon, these ranges are about 0.15-1.25 and 0.25-1.05%, respectively. These carbon contents as mentioned above are based on the weight of the steel skeleton not including the weight of copper.

The data of this Example is plotted in Fig. 5. It shows the impact strength decreasing to a minimum at abut 0.3% added carbon and then increasing back to a maximum at about 0.9% added carbon. The increase of ultimate tensile strength with carbon content is expected. However, the increase of impact strength from the minimum at 0.3% added carbon to the maximum at 0.9% added carbon, was not expected.

One would expect that impact strength would decrease with increased carbon content. Figure 5 also contains impact strength data taken from MPIF Standard 35. This data reflects widely used and typical industrial practice in the preparation of infiltrated iron powder metal parts. The data of Standard 35, in addition to being low, by comparison with the data of Example 6, shows a steady and continual decrease with increasing carbon content.

This tendency toward lower impact strengths with increased carbon in fact is well known with other steels and has been plotted for conventional (100% dense) plain carbon steels. Reference in this respect can be had to Fig. 41, on page 1120 of the publication "The Making, Shaping and Treating of Steel", published by United States Steel, 9th Edition, 1971. The Charpy impact values in the Figure decrease with carbon content as follows

| Carbon Content % | Charpy Impact | |
|---|---|---|
| | ft.lbs. | Joules |
| 0.2 | 40 | 54 |
| 0.3 | 25 | 34 |
| 0.5 | 10 | 14 |
| 0.7 | 5 | 7 |
| 0.9 | 3.5 | 4.7 |
| 1.1 | 2 | 3 |
| 1.3 | 1 | 1 |

The decrease in impact strength is most pronounced as the added carbon content is increased from 0.2 to about 0.5-0.7%, with the curve tapering off to near zero impact strength as the added carbon content passes about 1.1%.

Accordingly, referring back to the present Fig. 5, one would expect that the curve of Example would follow the same pattern with the impact strength decreasing continuously with carbon content eventually approaching zero as the added carbon content exceeds about 1.0%. In fact, initially the impact strength does decrease, as shown, but then, surprisingly, at the minimum at about 0.3% added carbon, the strength, instead of continuing to decrease, climbs to a maximum at about 0.9% added carbon.

Although the reason for this is not known, it is believed that the increasing amount of carbon increasingly inhibits the diffusion of the copper into the steel particle. This produces the same effect achieved by shorter infiltration time, namely, holding copper diffusion to the parameters stated herein. However, more than that, it is believed that this positive aspect of the carbon content, as the content increases above about 0.3%, begins to outweigh the negative effect of carbon content on impact strength. At the same time the benefit of improved ultimate tensile strength with increased carbon content is essentially unaffected, i.e., the ultimate tensile strength continues to increase with increasing carbon content, giving the desired attractive combinations of both properties.

Example 7

Samples are prepared as in Example 2, except that the powder is a -100 mesh 304L stainless steel (marketed by SCM Metal Products) and no graphite is added. This procedure results in a part possessing improved impact strength due to short time infiltration.

The following Example 8 demonstrates that a small amount of copper, if fairly uniformly diffused throughout the steel skeleton, is permissible for the attainment of improved combinations of tensile and impact strength.

Example 8

Samples were prepared as in Example 2, except that 1.5% of a -325 mesh copper powder was added in addition to the other components, and the powder blend was compacted to a density of 6.79 g/cm$^3$ and the slug to metal ratio was only 18%. Also, the skeleton sintering time was 90 minutes, whereas, the infiltration time was 5 minutes. The tempering temperature was 620°C (1150°F).

The Charpy unnotched impact strength was 111J (82 ft. lbs) and the ultimate tensile strength about 758 MPa (110 ksi).

This Example demonstrates that a small amount of copper, if fairly uniformly diffused throughout the steel skeleton, is permissible for the attainment of improved combinations of tensile and impact strength.

In all of the above Examples, the procedure of sintering and then infiltrating, in two steps, is employed. It is possible to practice the present invention with a single step sintering and infiltration process. This gives certain economies in utilities and furnace operation. However, better results appear to be obtainable by carrying out the sintering and infiltration in two steps rather than one, since the criteria in sintering and infiltration are not the same.

Example 9

This Example illustrates single step sintering and infiltrating. Samples are prepared as in Example 2, except that both sintering and infiltration treatments were established by a single ('sintration') process. This process consisted of heating in a synthetic nitrogen ('UCAR') atmosphere with a holding time of 7 minutes at 760°C (1400°F) and 7 minutes at 1120°C (2050°F). The impact strength (bar # 87) was 122J (90 ft. lbs.) and the ultimate tensile strength approximately 689 MPa (100 ksi).

**Claims**

1.  A copper infiltrated ferrous powder metal part infiltrated with copper or a copper alloy, said powder metal being a plain carbon steel having a combined carbon content in the range of about 0.15% to about 1.25% based on the weight of the powder metal,or stainless steel, low alloy steel or tool steel and the part after infiltration having a residual uninfiltrated porosity of less than about 7 volume percent and a maximum pore size of the residual uninfiltrated porosity of less than 125 micrometers, said porosity and pore size values being taken from a worst field of view (the worst field of view being selected from 50 random fields of view of size 914 by 1371 micrometers of a cross-section near a fractured surface) in a functionally critical area of said metal part (the critical area being defined as that area adjacent a fractured surface of an infiltrated part subjected to failure obtained by clean cutting-off the fractured surface and polishing the cut area), said metal part having a Charpy unnotched impact strength of greater than 67.8J (50 ft. lbs.) and an ultimate tensile strength greater than 413,700 kPa (60 ksi), said metal part having after infiltration an overall density of at least about 7.50 g/cm$^3$ and a diffusion depth of copper into the steel matrix of less than about 4 micrometers as determined by chemical etching or less than about 8 micrometers as determined by electron dispersive X-ray analysis.

2.  A metal part according to claim 1, wherein said diffusion depth is less than 3 micrometers as determined by chemical etching or less than 5 micrometers as determined by electron dispersive X-ray analysis.

3.  A metal part according to either of claims 1 and 2, wherein said ferrous powder metal is plain carbon steel having a combined carbon content in the range of about 0.25% to about 1.05%.

4.  A metal part according to any one of claims 1 to 3, having a residual uninfiltrated porosity of not more than about 5 volume percent, and a maximum pore size of the residual uninfiltrated porosity of less than about 75 micrometers, said porosity and pore size values being taken from the worst field of view (as defined in claim 1) in a functionally critical area (as defined in claim 1) of said metal part.

5.  An austenitized and tempered metal part according to claim 1, having after infiltration a residual uninfiltrated porosity of less than 5 volume percent, the ferrous metal being a plain carbon steel.

6. A process for infiltrating ferrous powder metal parts with a copper or copper alloy infiltrant consisting essentially of the steps of:

a) filling a die with a powder metal as defined in claim 1 to achieve uniform powder metal distribution in said die;

b) pressing said powder metal to a density of at least about 80% of theoretical density;

c) sintering said powder metal;

d) infiltrating said powder metal with a copper or copper alloy infiltrant;

the filling, pressing, sintering and infiltrating conditions being effective to provide a powder metal part having a residual uninfiltrated porosity, a maximum pore size of residual uninfiltrated porosity,a Charpy unnotched impact strength and an ultimate tensile strength as defined in claim 1, and wherein said infiltration is carried out under conditions to limit the depth of copper diffusion into the steel matrix as measured by chemical etching to less than about 4 micrometers, or less than about 8 micrometers when determined by electron dispersive X-ray analysis.

7. A process according to claim 6, wherein said diffusion depth is less than 3 micrometers as determined by chemical etching or less than 5 micrometers as determined by electron dispersive X-ray analysis.

8. The process of either of claims 6 and 7, wherein said sintering, or infiltrating, or both, are carried out under vacuum conditions or under a hydrogen atmosphere.

9. The process of anyone of claims 6-8, wherein said metal powder is plain carbon steel and which includes the step of heat treating said metal part by austenitizing and tempering.

10. The process of anyone of claims 6-9, wherein said ferrous powder metal is plain carbon steel having a combined carbon content in the range of from about 0.25% to about 1.05%, based on the weight of the powder metal.

11. A process according to any one of claims 6-10, comprising sintering said metal part followed by copper infiltration.

12. A process according to anyone of claims 6 to 10 wherein the sintering and infiltrating are carried out simultaneously.

**Revendications**

1. Article en poudre métallique de fer infiltrée de cuivre, infiltré de cuivre ou d'un alliage de cuivre, ladite poudre métallique étant un acier au carbone ayant une teneur en carbone combiné qui se situe dans une fourchette qui va d'environ 0,15 % à environ 1,25 % du poids de la poudre métallique, ou étant un acier inoxydable, un acier allié à faible teneur ou un acier à outils, et l'article après infiltration ayant une porosité non infiltrée résiduelle inférieure à environ 7 % en volume et une taille maximale de pores de la porosité non infiltrée résiduelle inférieure à 125 micromètres, lesdites valeurs de porosité et de taille de pores étant dérivées de la pire zone de visualisation (la pire zone de visualisation étant sélectionnée parmi 50 zones de visualisation d'une section transversale de 914 sur 1371 micromètres prises au hasard au voisinage d'une surface fracturée) prise dans une région fonctionnellement critique dudit article métallique (la région critique étant définie comme étant la région qui est adjacente à une surface fracturée d'un article infiltré rompu, la rupture étant obtenue par coupe franche de la surface fracturée et par polissage de la région coupée), ledit article métallique ayant une résistance aux chocs sur éprouvette à entaille en V de Charpy supérieure à 67,8 J (50 pieds livre) et une résistance à la tension de rupture supérieure à 413,700 kPa (60 ksi), ledit article métallique ayant après infiltration une densité globale d'au moins environ 7,50 g/cm$^3$ et une profondeur de diffusion du cuivre dans la matrice en acier inférieure à environ 4 micromètres si elle est déterminée par gravure chimique, ou inférieure à environ 8 micromètres si elle est déterminée par analyse aux rayons X de la dispersion électronique.

2. Article métallique selon la revendication 1, dans lequel la dite profondeur de diffusion est inférieure à 3 micromètres si elle est déterminée par gravure chimique ou inférieure à 5 micromètres si elle est déterminée par analyse aux rayons X de la dispersion électronique.

3. Article métallique selon l'une des revendications 1 ou 2, dans lequel ladite poudre métallique est un

14

acier au carbone ayant une teneur en carbone combiné qui s'inscrit dans une fourchette qui va d'environ 0,25 % à environ 1,05 %.

4. Article métallique selon l'une quelconque des revendications 1 à 3, ayant une porosité non infiltrée résiduelle non supérieure à environ 5 % en volume et une taille maximale de pores de la porosité non infiltrée résiduelle inférieure à environ 75 micromètres, lesdites valeurs de porosité et de taille de pores étant dérivées de la pire zone de visualisation (telle que définie dans la revendication 1) dans une région fonctionnellement critique (telle que définie dans la revendication 1) dudit article métallique.

5. Article métallique austénisé et adouci selon la revendication 1 ayant après infiltration une porosité non infiltrée résiduelle inférieure à 5 % en volume, le métal ferreux étant un acier au carbone.

6. Procédé d'infiltration d'articles en poudre métallique de fer avec un infiltrant de cuivre ou d'alliage de cuivre, constitué essentiellement par les étapes de :
   a) remplissage d'une matrice avec une poudre métallique telle que définie dans la revendication 1 afin d'obtenir une distribution de poudre métallique uniforme dans ladite matrice ;
   b) compresion de ladite poudre métallique jusqu'à une densité égale à au moins 80 % de la densité théorique ;
   c) frittage de ladite poudre métallique ;
   d) infiltration de ladite poudre métallique avec un infiltrant de cuivre ou d'alliage de cuivre ;
   les conditions de chargement, de compression, de frittage et d'infiltration permettant d'obtenir un article en poudre métallique ayant une porosité non infiltrée résiduelle, une taille maximale de pores de porosité non infiltrée résiduelle, une résistance aux chocs sur éprouvette à entaille en V de Charpy et une résistance à la tension de rupture telles que définies dans la revendication 1, et dans lequel ladite infiltration est mise en oeuvre dans certaines conditions pour limiter la profondeur de diffusion du cuivre dans la matrice en acier, jusqu'à moins d'environ 4 micromètres si elle est mesurée par gravure chimique ou jusqu'à moins d'environ 8 micromètres si elle est déterminée par analyse aux rayons X de la dispersion électronique.

7. Procédé selon la revendication 6, dans lequel ladite profondeur de diffusion est inférieure à 3 micromètres si elle est déterminée par gravure chimique ou inférieure à 5 micromètres si elle est déterminée par analyse aux rayons X de la dispersion électronique.

8. Procédé selon la revendication 6 ou 7, dans lequel ledit frittage ou ladite infiltration ou les deux sont mis en oeuvre dans des conditions de vide ou dans une atmosphère d'hydrogène.

9. Procédé selon l'une quelconque des revendications 6 à 8, dans lequel ladite poudre métallique est un acier au carbone, le procédé incluant l'étape de traitement thermique dudit article métallique par austénisation et adoucissement.

10. Procédé selon l'une quelconque des revendications 6 à 9, dans lequel ladite poudre métallique est un acier au carbone ayant une teneur en carbone combiné qui se situe dans une fourchette qui va d'environ 0,25 % à environ 1,05 % du poids de la poudre métallique.

11. Procédé selon l'une quelconque des revendications 6 à 10, comprenant le frittage dudit article métallique suivi de l'infiltration de cuivre.

12. Procédé selon l'une quelconque des revendications 6 à 10, dans lequel le frittage et l'infiltration sont mis en oeuvre simultanément.

**Patentansprüche**

1. Metallteil aus kupfergetränktem Eisenpulver, das mit Kupfer oder einer Kupferlegierung getränkt ist, wobei das Metallpulver ein reiner Kohlenstoffstahl ist mit einem Gehalt an gebundenem Kohlenstoff im Bereich von etwa 0,15% bis etwa 1,25% basierend auf dem Gewicht des Metallpulvers, oder nichtrostender Stahl, niedriglegierter Stahl oder Werkzeugstahl, und wobei das Teil nach dem Tränken ein restliches nichtgetränktes Porenvolumen von weniger als 7 Vol.-% besitzt und eine maximale Porengröße des restlichen nichtgetränkten Porenvolumens von weniger als 125 $\mu$m, wobei die Werte

für das Porenvolumen und die Porengröße von einem schlechtesten Gesichtsfeld stammen (das schlechteste Gesichtsfeld wurde ausgewählt aus 50 willkürlichen Gesichtsfeldern der Größe 914 x 1371 $\mu$m im Querschnitt in der Nähe einer Bruchfläche) in einem funktionell kritischen Bereich des Metallteils (der kritische Bereich ist definiert als der Bereich neben einer Bruchfläche eines gebrochenen, getränkten Teils, der durch sauberes Abschneiden der Bruchfläche und Polieren der Schnittfläche erhalten wurde), wobei das Metallteil eine Schlagfestigkeit nach Charpy ohne Kerbe von mehr als 67,8 J besitzt und eine Reißfestigkeit von mehr als 413.700 kPa, und nach dem Tränken besitzt das Metallteil eine Gesamtdichte von mindestens etwa 7,50 g/cm$^3$ und eine Diffusionstiefe von Kupfer in die Stahlmatrix von weniger als etwa 4 $\mu$m, ermittelt durch chemisches Ätzen, oder weniger als etwa 8 $\mu$m, ermittelt durch Elektronendispersionsröntgenanalyse.

2. Metallteil nach Anspruch 1, dadurch gekennzeichnet, daß die Diffusionstiefe weniger als 3 $\mu$m beträgt, bestimmt durch chemisches Ätzen, oder weniger als 5 $\mu$m, bestimmt durch Elektronendispersionsröntgenanalyse.

3. Metallteil nach einem der Ansprüche 1 und 2, dadurch gekennzeichnet, daß das eisenhaltige Metallpulver reiner Kohlenstoffstahl ist mit einem Gehalt an gebundenem Kohlenstoff im Bereich von etwa 0,25% bis etwa 1,05%.

4. Metallteil nach einem der Ansprüche 1 bis 3 mit einem restlichen nichtgetränkten Porenvolumen von nicht mehr als etwa 5 Vol.-%, einer maximalen Porengröße des restlichen nichtgetränkten Porenvolumens von weniger als etwa 75 $\mu$m, wobei die Werte für das Porenvolumen und die Porengröße aus dem schlechtesten Gesichtsfeld stammen (gemäß der Definition von Anspruch 1) in einem funktionell kritischen Bereich (gemäß der Definition von Anspruch 1) des Metallteils.

5. Austenitisiertes und angelassenes Metallteil nach Anspruch 1, welches nach dem Tränken ein restliches nichtgetränktes Porenvolumen von weniger als 5 Vol.-% besitzt, wobei das eisenhaltige Metall ein reiner Kohlenstoffstahl ist.

6. Verfahren zum Tränken von Metallteilen aus eisenhaltigem Pulver mit Kupfer oder einer Kupferlegierung als Tränkungsmittel, im wesentlichen umfassend die folgenden Schritte:

   a) Füllen einer Form mit einem Metallpulver gemäß Anspruch 1, um eine gleichmäßige Verteilung des Metallpulvers in der Form zu erreichen;
   b) Pressen des Metallpulvers zu einer Dichte von mindestens etwa 80% der theoretischen Dichte;
   c) Sintern des Metallpulvers;
   d) Tränken des Metallpulvers mit Kupfer oder einer Kupferlegierung als Tränkungsmittel;
   wobei die Maßnahmen des Füllens, Pressens, Sinterns und Tränkens geeignet sind, ein Metallpulverteil herzustellen, das ein restliches nichtgetränktes Porenvolumen, eine maximale Porengröße des restlichen nichtgetränkten Porenvolumens, eine Schlagfestigkeit nach Charpy ohne Kerbe und eine Zugfestigkeit gemäß Anspruch 1 besitzt, und wobei das Tränken unter Bedingungen durchgeführt wird, die die Diffusionstiefe des Kupfers in die Stahlmatrix, gemessen durch chemisches Ätzen, auf weniger als 4 $\mu$m begrenzen, oder auf weniger als 8 $\mu$m, ermittelt durch Elektronendispersionsröntgenanalyse.

7. Verfahren nach Anspruch 6, dadurch gekennzeichnet, daß die Diffusionstiefe weniger als 3 $\mu$m beträgt, ermittelt durch chemisches Ätzen, oder weniger als 5 $\mu$m, ermittelt durch Elektronendispersionsröntgenanalyse.

8. Verfahren nach einem der Ansprüche 6 und 7, dadurch gekennzeichnet, daß das Sintern, Tränken oder beides im Vakuum oder unter einer Wasserstoffatmosphäre durchgeführt werden.

9. Verfahren nach einem der Ansprüche 6 bis 8, dadurch gekennzeichnet, daß das Metallpulver reiner Kohlenstoffstahl ist, und daß das Verfahren den Schritt der Wärmebehandlung des Metallteils durch Austenitisieren und Anlassen umfaßt.

10. Verfahren nach einem der Ansprüche 6 bis 9, dadurch gekennzeichnet, daß das eisenhaltige Metallpulver reiner Kohlenstoffstahl ist mit einem Gehalt an gebundenem Kohlenstoff im Bereich von etwa 0,25% bis etwa 1,05%, basierend auf dem Gewicht des Metallpulvers.

**11.** Verfahren nach einem der Ansprüche 6 bis 10, umfassend das Sintern des Metallteils gefolgt vom Tränken mit Kupfer.

**12.** Verfahren nach einem der Ansprüche 6 bis 10, dadurch gekennzeichnet, daß das Sintern und Tränken gleichzeitig durchgeführt werden.

FIG. I

FIG.2

FIG.3   RELATIONSHIP BETWEEN COPPER CONTENT AND MICROHARDNESS OF DIFFUSION LAYER

INFILTRATION 90 MINS. AT 2050°F. QUENCHED AND TEMPERED CONDITION

FIG.5

EP 0 214 725 B1

# FIG. 4

PHOTOGRAPHS SHOWING DEFORMATION
DURING IMPACT TESTING. TOP SPECIMEN
INFILTRATED 5 MINUTES (174 FT.-LBS.)
BOTTOM SPECIMEN INFILTRATED 90
MINUTES (101 FT.-LBS.)
(APPROXIMATELY ACTUAL SIZE)